# EUROPÄISCHE PATENTSCHRIFT

(11) **EP 1 127 792 B1**
(45) Veröffentlichungstag und Bekanntmachung des Hinweises auf die Patenterteilung: **22.06.2005**
(21) Anmeldenummer: 01100704.4
(22) Anmeldetag: 12.01.2001
(51) Int. Cl.: B65B 51/02

(54) **Verfahren und Einrichtung zum Verkleben von Verpackungsteilen**
Method and device for bonding packaging parts
Procédé et dispositif pour coller des parties d'emballage

(30) Priorität: 26.02.2000 DE 10009195
(43) Veröffentlichungstag der Anmeldung: 29.08.2001
(73) Patentinhaber: Focke & Co. (GmbH & Co. KG), 27283 Verden (DE)
(72) Erfinder: Heide, Jirko, 21493 Schwarzenbek (DE)
(74) Vertreter: Meissner & Bolte Patentanwälte

(56) Entgegenhaltungen:
- EP-A- 0 014 946
- EP-A- 0 038 488
- EP-A- 0 473 318
- EP-A- 0 475 587
- EP-A- 0 940 342
- EP-A- 0 947 445
- DE-A- 3 045 706
- DE-A- 3 447 771
- US-A- 4 747 894

## Beschreibung

Die Erfindung betrifft ein Verfahren zum Verkleben von Verpackungsteilen von Verpackungen von Produkten der tabakverarbeitenden Industrie, insbesondere von Zigarettenverpackungen, wobei auf wenigstens einem der zu verklebenden Verpackungsteile ein Klebemittel aufgebracht wird und die teilweise gefaltete Verpackung entlang einer Transportstrecke bewegt und mit einem Führungselement derart in Kontakt gebracht wird, dass die zu verklebenden Verpackungsteile zur überlappenden Anlage aneinander gebracht werden und in dieser Stellung während des Transports entlang der Transportstrecke wenigstens zeitweise durch das Führungselement gehalten werden nach dem Oberbegriff des Anspruchs 1. Weiter betrifft die Erfindung eine entsprechende Einrichtung nach dem Oberbegriff des Anspruchs 7.

Produkte der tabakverarbeitenden Industrie können in Verpackungsmaschinen, die beispielsweise in EP-A-0 940 342 teilweise beschrieben sind, gefertigt werden. Typisch ist dabei der Transport eines insbesondere teilweise gefalteten Zuschnitts durch die Verpackungsmaschine hindurch zur sequentiellen Bearbeitung, insbesondere Beleimung und Faltung des Zuschnitts in verschiedenen Stationen. Mit der Erhöhung der Produktionsleistung von Verpackungsmaschinen verkürzen sich die Durchlaufzeiten der Produkte bzw. hergestellten Verpackungen innerhalb der Maschine. Bei der Herstellung von Verpackungen werden Teile der Verpackungen miteinander verklebt. Hierbei werden Klebstoffe oder Leime verwendet, die bestimmte Mindesttrockenzeiten benötigen. Während dieser Mindesttrockenzeiten ist es notwendig, die zu verklebenden Teile gegeneinander zu drücken. Um bestimmte Mindesttrockenzeiten zu realisieren, müssen die Trockenstrecken ausreichend lang sein.

Um zu langen Trockenstrecken entgegenzuwirken, sind vielfältige Anstrengungen unternommen worden, wie beispielsweise Hybridleimsysteme, bei dem ein Heißkleber zum Anheften der Verpackungsteile aneinander Verwendung findet und gleichezeit ein Kaltleim, der daraufhin dann nach einer längeren Zeit aushärten kann, wobei aufgrund des Heißleims kurze Trockenstrecken realisiert werden können. Außerdem sind verschiedene auf Kontakt- oder Strahlungswärme basierende Trocknungssysteme bekannt.

Derartige Leimsysteme oder Trocknungssysteme haben allerdings die folgenden Nachteile:

Bei einer direkt beheizten Führung kann es zu einer Überhitzung des Verpackungsgutes bei einem Maschinenstopp kommen. Femer ist der Wärmeübergang bei sich bewegenden Verpackungsteilen bei einer direkt beheizten Führung problematisch. Hierdurch kann es zu einer ungleichmäßigen Wärmeverteilung kommen. Ggf. könnte sich bei Zigarettenverpackungen eine aromatische Veränderung am Tabak durch Wärme oder andere Einwirkungen ergeben. Bei Verwendung eines elektromagnetischen Feldes und metallischen Verpackungsbestandteilen kann es durch induzierte Spannungen zu Beschädigungen aufgrund Funkenüberschlages kommen.

Demgegenüber stellt sich die Aufgabe, ein Verfahren und eine Einrichtung zum Verkleben von Verpackungsteilen von Verpackungen von Produkten der tabakverarbeitenden Industrie anzugeben, mit der ein schnelles und sicheres Verkleben beim Transport der Verpackungen entlang einer Transportstrecke in kurzer Zeit möglich ist, wobei die Einrichtung möglichst einfach realisierbar sein soll. Es ist ferner Aufgabe der vorliegenden Erfindung, die zu verklebenden Verpackungen hierbei schonend zu behandeln.

Gelöst wird diese Aufgabe durch ein Verfahren mit den Merkmalen des Anspruchs 1, wobei wenigstens ein zu verklebender Verpackungsteil während des Transports entlang der Transportstrecke zum Abbinden des Klebemittels über die Führungselemente mit Ultraschall beaufschlagt wird

Es ist nämlich erkannt worden, dass ein Klebstoff und insbesondere ein Klebstoff, der Wasseranteile oder andere Flüssigkeitsanteile enthält, durch Beaufschlagung mit Ultraschall schneller abbindet, und zwar insbesondere durch ein schnelleres Eindringen des Klebstoffes und insbesondere von Kaltleim in die Oberfläche der zu verklebenden Verpackungsteile, insbesondere Papier oder Pappe. Hierbei wird insbesondere von dem Effekt Gebrauch gemacht, dass bei Kontakt eines Klebstofftropfens mit einem entsprechend mit Ultraschallfrequenz schwingenden Bauteil sich dieser in einen Nebel von mikroskopisch kleinen Partikeln zerstäubt, die zum einen in einer saugfähigen Oberfläche wie Papier schneller eindringen können als ein großer Tropfen Klebstoff und auch schneller abbinden können, da so die Oberfläche wesentlich erhöht wird und damit eine wesentlich größere Kontaktfläche gebildet wird.

Außer dem schnelleren Abbinden des Dispersionsleimes hat die Erfindung den weiteren Vorteil, dass die hochfrequente Schwingung der Führungsflächen zu einem wesentlich besseren Gleitverhalten der Verpackungen führt, so dass diese eine schonendere Behandlung erfahren, wodurch die zum Teil sehr empfindlichen Oberflächen der Verpackungen erheblich geschont werden. Außerdem wird weniger Kraft zum Bewegen der Verpackungen in Schubstrecken benötigt

Das Klebemittel kann hierbei vorzugsweise selbsttätig abbindend sein und ist insbesondere vorzugsweise ein Dispersionsleim. Durch das schnelle Abbinden des Klebstoffes ist es nicht mehr nötig, die zu verklebenden Verpackungsteile mit hohem Druck aneinander zu drücken. Es ist somit nicht mehr notwendig, ein Widerlager vorzusehen.

Vorzugsweise wirkt der Ultraschall vor einem Zusammendrücken des zu verklebenden Verpackungsteils mit einem weiteren Verpackungsteil auf das Klebemittel ein, so dass das Erzeugen eines Nebels mikroskopisch kleiner Klebemittelpartikel vereinfacht wird.

Vorzugsweise wirkt der Ultraschall auf die zu verklebenden Verpackungsteile beim Zusammendrücken oder Zusammenhalten der zu verklebenden Verpackungsteile. Durch diese Maßnahme findet eine Verteilung mikroskopisch kleiner Klebemittelpartikel auch bei zusammengedrückten Verpackungsteilen statt.

Vorzugsweise wirkt der Ultraschall gleichzeitig auf wenigstens zwei Seiten der Verpackung. Hierdurch ist eine schnellere Verfahrensführung möglich. Eine noch genauere und schnellere Verklebung von Verpackungsteilen ist möglich, wenn vorzugsweise die zu verklebenden Verpackungsteile der Verpackungen an zwei gegenüberliegenden Seiten insbesondere durch zwei Ultraschallübertragungselemente mit Ultraschall beaufschlagt werden.

Vorzugsweise geschieht das Beaufschlagen mit Ultraschall mit einem Ultraschallübertragungselement auf das zu verklebende Verpackungsteil ohne ein direkt auf die dem Ultraschallübertragungselement abgewandte Seite des zu verklebenden Verpackungsteils drückendes Widerlager. Durch diese Maßnahme ist es möglich, Verpackungsteile auch ohne Widerlager fest und genau zu verkleben, wodurch es insbesondere möglich ist, schon mit Zigaretten befüllte Verpackungen zu verkleben, und zwar insbesondere Seitenlappen dieser Verpackungen an die Verpackungen oder weitere Teile der Verpackungen.

Erfindungsgemäß wird eine Einrichtung zum Verkleben von Verpackungsteilen von Verpackungen von Produkten der tabakverarbeitenden Industrie, dadurch weitergebildet, dass das erste Führungselement wenigstens teilweise ein Ultraschallübertragungselement zum Übertragen von Ultraschall auf wenigstens einen zu verklebenden Verpackungsteil während des Transports entlang der Transportstrecke umfasst.

Mit dieser erfindungsgemäßen Einrichtung ist es möglich, Verpackungsteile schnell, sicher zu verkleben und gleichzeitig die zum Teil sehr empfindlichen Oberflächen der Verpackungen beim Transport zu schonen.

Wenn vorzugsweise kein Widerlager vorgesehen ist, das direkt auf die dem Führungselement abgewandte Seite des Verpackungsteils drückt, ist es insbesondere möglich, schon mit Verpackungsgut befüllte Verpackungen schnell und zuverlässig zu verkleben.

Vorzugsweise ist das Führungselement ein Faltorgan, so daß direkt beim Falten ein Verkleben von Verpackungsteilen vorzugsweise unter Beaufschlagung mit Ultraschall möglich ist.

Wenn vorzugsweise das Führungselement quer zu einer Bewegungsrichtung der Verpackungen teilweise mit einem Abstand zu den zugeführten Verpackungen versehen ist, ist ein Einführen der Verpackungen vereinfacht möglich.

Vorzugsweise verringert sich in einem ersten Bereich des Führungselementes der Abstand in Förderrichtung der Verpackungen und in einem zweiten Bereich bleibt der Abstand im wesentlichen gleich. Vorzugsweise liegt in dem zweiten Bereich des Führungselementes das Führungselement an dem wenigstens einen Verpackungsteil oder der Verpackung an.

Wenn vorzugsweise ein zweites Führungselement vorgesehen ist, das im wesentlichen gegenüber einer Symmetrieachse gespiegelt zu dem ersten Führungselement angeordnet ist, ist eine besonders einfache und effektive Ausgestaltung der erfindungsgemäßen Einrichtung möglich. Hierbei ist als Symmetrieachse beispielsweise eine Mittelachse der zu fördernden Verpackungen in Förderrichtung zu verstehen oder aber eine orthogonal auf der Förderbahn angeordnete Ebene, die genau in der Mitte zwischen den zwei Führungselementen angeordnet ist. Im Rahmen dieser Erfindung kann das erste Führungselement so ausgebildet sein, daß es auch zwei Seiten der Verpackung oder räumlich unterschiedlich ausgerichtete Verpackungsteile mit Ultraschall beaufschlagen kann, wie insbesondere zwei benachbarte Seiten oder gegenüberliegende Seiten. Das erste Führungselement ist dann beispielsweise in Art eines L oder eines U ausgebildet.

Vorzugsweise ist die Verpackung durch beide Führungselemente durchführbar oder einführbar, wobei jeweils eine Seite der Verpackung in Kontakt zu der jeweiligen Führung steht. Durch diese Maßnahme ist ein besonders schnelles und sicheres Verkleben der Verpackungen oder Verpackungsteile möglich. Wenn vorzugsweise der Abstand der beiden Führungen in dem zweiten Bereich zueinander geringer ist als das Außenmaß der Verpackungen, wird auf die Verpackungsteile beim Verkleben ein gewisser Druck ausgeübt, so daß diese eng aneinanderliegend verklebt werden können.

Vorzugsweise umfaßt das zweite Führungselement wenigstens teilweise ein Ultraschallübertragungselement. Das Ultraschallübertragselement ist vorzugsweise eine Sonotrode oder ein Ultraschallgeber. Bei dieser besonders bevorzugten Ausführungsform der vorliegenden Erfindung können gleichzeitig zwei Seiten einer Verpakkung ohne Verwendung eines Widerlagers bzw. eines direkten Widerlagers an entsprechende weitere Teile der Zigarettenpackungen, wie insbesondere Seitenlappen von Zigarettenpackungen, schnell und zuverlässig verklebt werden.

Vorzugsweise umfaßt ein Faltrevolver zum Falten von Packungsteilen von Zigarettenverpackungen eine vorgenannte Einrichtung. Durch diese vorzugsweise Ausgestaltung ist kein zusätzliches Element in einer Verpakkungsmaschine notwendig, in der ein Verkleben der Verpackungsteile stattfindet, und gleichzeitig kann eine Resttrocknung des Klebstoffes in dem Faltrevolver stattfinden.

Vorzugsweise umfaßt eine Zigarettenverpackungsmaschine wenigstens eine vorgenannte Einrichtung und/oder einen vorgenannten Faltrevolver. Vorzugsweise ist die vorgenannte Einrichtung in einer Transportstrecke und/oder Trockenstrecke der Zigarettenverpackungsmaschine angeordnet. Vorzugsweise kann eine entsprechende Einrichtung an jedem Bereich einer sonst freien Transportstrecke angeordnet sein.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: eine schematische Darstellung einer Ausführungsform einer Einrichtung zum Verkleben von Verpackungsteilen,
- Fig. 2: eine schematische Darstellung eines Faltrevolvers und
- Fig. 3: eine schematische Darstellung einer Transportstrecke in zwei verschiedenen Ansichten.

In den folgenden Figuren sind jeweils gleiche oder entsprechende Teile mit den selben Bezugszeichen bezeichnet, so daß auf eine erneute Vorstellung verzichtet wird und lediglich die Abweichungen der in diesen Figuren dargestellten Ausführungsbeispiele gegenüber dem ersten Ausführungsbeispiel erläutert werden.

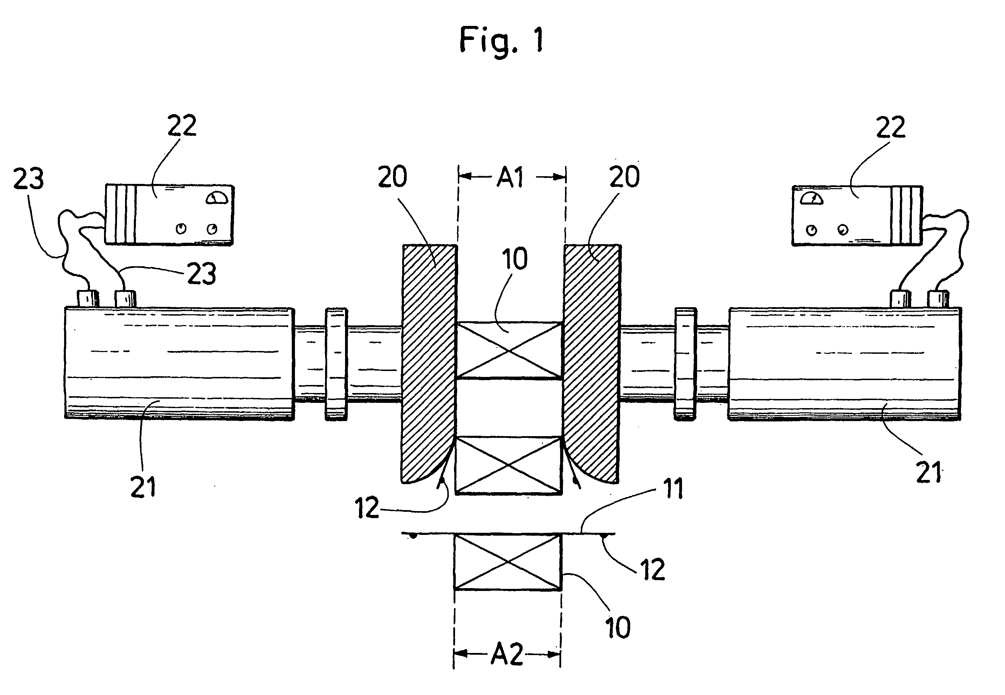

Fig. 1 zeigt schematisch eine Ausführungsform der Erfindung. Zigarettenschachteln 10 werden in der Fig. 1 von unten nach oben durch einen Bereich zweier Sonotroden 20 geführt. Die Sonotroden 20 geben Ultraschall an die Seiten der Zigarettenschachteln 10 ab, die in Kontakt mit den Sonotroden 20 kommen. Generatoren 22 übermitteln ein hochfrequentes Signal von über 16 kHz und bevorzugterweise 20 kHz über Kabel 23 an einen Schallwandler 21. Der Schallwandler 21 umfaßt bevorzugterweise einen magnetostriktiven oder piezoelektrischen Schwinger. Die Schwingungen des magnetostriktiven oder piezoelektrischen Schwingers werden über ein Schwingungsmedium an die Sonotrode weitergeleitet und dabei vorzugsweise durch einen Booster verstärkt.

In Fig. 1 sind ferner Zigarettenschachteln 10 dargestellt, die noch nicht vollständig verklebt sind. An der ganz unten in der Fig. 1 dargestellten Zigarettenschachtel 10 sind zwei Seitenlappen 11 dargestellt, auf denen ein Kaltleimtropfen 12 aufgebracht ist. Der Kaltleimtropfen besteht in diesem Ausführungsbeispiel aus einem Dispersionsleim, der beispielsweise einen Wasseranteil von ca. 50 % hat. Beim Zuführen der Zigarettenschachtel 10 zu den Sonotroden 20, die als Faltorgan ausgebildet sind, werden die Seitenlappen 11 zur Zigarettenschachtel 10 hingeklappt. Hierbei werden schon Schwingungen der Sonotrode im Ultraschallbereich an die Seitenlappen 11 und damit auch an den Kaltleimtropfen 12 weitergegeben, wodurch dieser schon zum Teil zerstäubt wird. Der Abstand A1 der Sonotroden 20 ist hierbei etwas geringer ausgestaltet als die Kantenlänge A2 der Zigarettenschachtel 10. Hierdurch entsteht beim Durchführen der Zigarettenschachtel 10 durch die Sonotroden 20 ein gewisser Druck, der auf die Seitenlappen 11 ausgeübt wird, wodurch die Seitenlappen 11 auf die Zigarettenschachtel 10 gepreßt werden. Dieser Druck darf allerdings nicht zu groß werden, um nicht die Zigarettenschachteln 10 oder die darin befindlichen Zigaretten zu beschädigen.

Bei einer derartigen Einrichtung zum Verkleben von Zigarettenschachteln kommt es zu einem schnellen und besseren Verkleben als ohne Anwendung von Ultraschall. Während des Durchführens durch die Sonotroden 20 werden zunächst die offenen Seitenlaschen aufgrund der speziellen Führungen zunächst gefaltet und dann zugehalten. Außer dem schnelleren Abbinden des Dispersionsleimes hat die Erfindung den weiteren Vorteil, daß die hochfrequente Schwingung der Führungsflächen zu einem wesentlich besseren Gleitverhalten der Zigarettenschachteln 10 führt, so daß diese eine schonendere Behandlung erfahren, wodurch die zum Teil sehr empfindlichen Oberflächen der Zigarettenschachteln oder Faltschachteln erheblich geschont werden. Außerdem wird weniger Kraft zum Bewegen der Packungen in Schubstrecken benötigt.

Das Schwingsystem besteht, wie hier dargestellt ist, aus einem Generator 22, dem Schallwandler 21 und der Sonotrode 20, wobei der Schallwandler 21 und die Sonotrode 20 bevorzugt als eine Einheit ausgebildet ist.

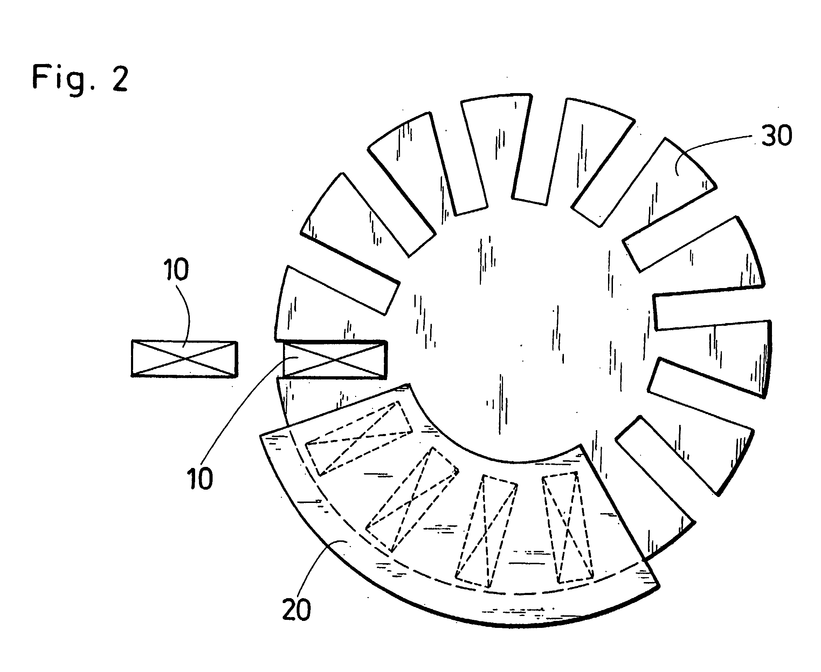

Fig. 2 zeigt eine schematische Darstellung eines Faltrevolvers 30 gemäß einer weiteren Ausführungsform der Erfindung. Die Zigarettenschachteln 10 werden in eine Tasche des Revolvers eingeschoben. Bei einer anschließenden Taktbewegung, bei der sich der Faltrevolver 30 entgegen dem Uhrzeigersinn dreht, stoßen die noch offenen Seitenlappen 11 der Zigarettenschachteln 10, die hier nicht explizit dargestellt sind, da diese aus der Ebene der Fig. 2 herausragen, gegen spezielle Führungen, die durch eine spezielle Ausgestaltung der Sonotrode 20 insbesondere gegeben sind, und werden durch diese gefaltet und zugehalten und gleichzeitig mit Ultraschall beaufschlagt. Es muß nun dafür gesorgt werden, daß bei ausschließlicher Verwendung von Dispersionsleim die Seitenlaschen oder Seitenlappen bis zum Abbinden des Leimes zugehalten werden. In diesem Ausführungsbeispiel ist das feststehende Faltorgan als Ultraschallschwinger oder Sonotrode 20 ausgeführt. Hierbei ist ein flächiger Kontakt der Führung mit der Packungsoberfläche und ein definierter Anpreßdruck wesentlich.

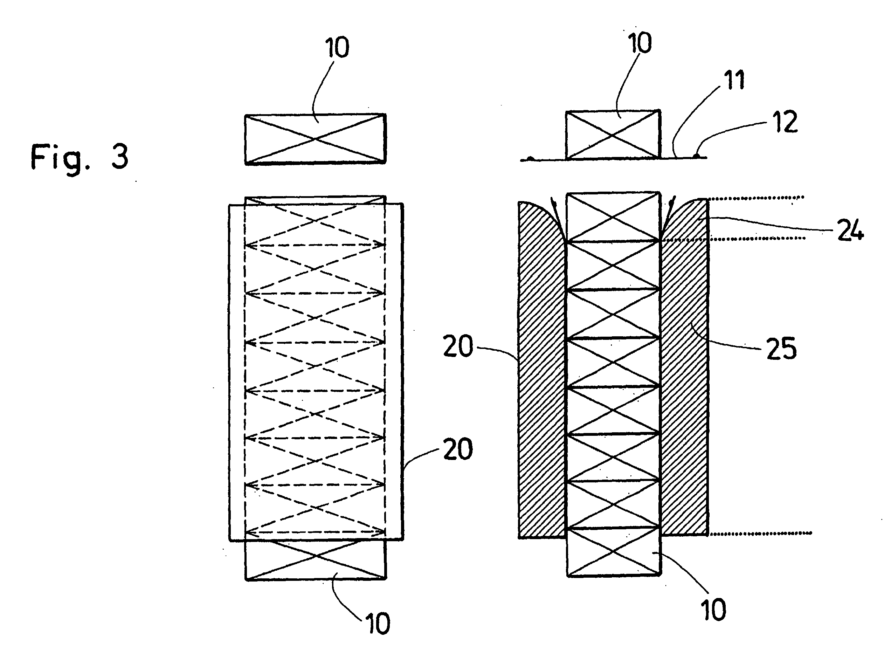

In Fig. 3 ist eine weitere Ausführungsform der Erfindung in zwei Ansichten dargestellt. Die rechts dargestellte Ansicht der Fig. 3 ähnelt der Ansicht der Fig. 1, wohingegen die links dargestellte Ansicht eine um 90° gegenüber der rechts dargestellten Ansicht gedrehte Ansicht ist. In diesem Ausführungsbeispiel ist die Sonotrode im Bereich einer Führung im linearen Teil einer Transportstrecke oder Trockenstrecke realisiert. In der Fig. 3 auf der rechten Seite ist insbesondere ein erster Bereich 24 dargestellt, in der anfangs eine größere Öffnung im oberen Bereich der Sonotrode gezeigt ist, wobei die Öffnung verjüngend ausgestaltet ist, so daß schließlich ein im wesentlichen gleichbleibender Abstand der Sonotroden im Bereich 25 erreicht wird.

Beim Vergleich des Verklebens von Teilen von Zigarettenschachteln mit weiteren Teilen der Zigarettenschachteln hat sich ergeben, daß bei ansonsten identischen Bedingungen bezüglich der Leimmenge, des Drucks, der Temperatur, des Papiers und der Art des Leimes ein wesentlich stärkerer Faserausriß nach Verkleben mit Ultraschalleinwirkung festzustellen war, als ohne Ultraschalleinwirkung. Es ist also zudem eine verbesserte Verklebung mit der Erfindung erzielbar.

### Bezugszeichenliste

- 10: Zigarettenschachtel
- 11: Seitenlappen
- 12: Kaltleimtropfen
- 20: Sonotrode
- 21: Schallwandler
- 22: Generator
- 23: Kabel
- 24: erster Bereich
- 25: zweiter Bereich
- 30: Faltrevolver
- A1: Abstand der Sonotrode
- A2: Kantenlänge der Zigarettenschachtel

## Patentansprüche

1. Verfahren zum Verkleben von Verpackungsteilen (11) von Verpackungen (10) von Produkten der tabakverarbeitenden Industrie, insbesondere von Zigarettenverpackungen, wobei auf wenigstens einem der zu verklebenden Verpackungsteile (10) ein Klebemittel (12) aufgebracht wird und die teilweise gefaltete Verpackung (10) entlang einer Transportstrecke bewegt und mit einem Führungselement (20) derart in Kontakt gebracht wird, dass die zu verklebenden Verpackungsteile (11) zur überlappenden Anlage aneinander gebracht werden und in dieser Stellung während des Transports entlang der Transportstrecke wenigstens zeitweise durch das Führungselement (20) gehalten werden, **dadurch gekennzeichnet, dass** wenigstens ein zu verklebender Verpackungsteil (11) während des Transports entlang der Transportstrecke zum Abbinden des Klebemittels (12) über die Führungselemente (20) mit Ultraschall beaufschlagt wird.

2. Verfahren nach Anspruch 1, **dadurch gekennzeichnet, dass** der Ultraschall vor einem Zusammendrücken des zu verklebenden Verpackungsteils (10) mit einem weiteren Verpackungsteil auf das Klebemittel einwirkt.

3. Verfahren nach Anspruch 1 und/oder 2, **dadurch gekennzeichnet, dass** der Ultraschall auf die zu verklebenden Verpackungsteile (11) beim Zusammendrücken oder Zusammenhalten der zu verklebenden Verpackungsteile (11) wirkt.

4. Verfahren nach einem oder mehreren der Ansprüche 1 bis 3, **dadurch gekennzeichnet, dass** der Ultraschall gleichzeitig auf wenigstens zwei Seiten der Verpackungen (10) wirkt.

5. Verfahren nach Anspruch 4, **dadurch gekennzeichnet, dass** die zu verklebenden Verpackungsteile (11) der Verpackungen (10) an zwei gegenüberliegenden Seiten, insbesondere durch zwei Ultraschallübertragungselemente (20), mit Ultraschall beaufschlagt werden.

6. Verfahren nach einem oder mehreren der Ansprüche 1 bis 5, **dadurch gekennzeichnet, dass** das Beaufschlagen mit Ultraschall mit einem Ultraschallübertragungselement (20) auf das zu verklebende Verpackungsteil (11) ohne ein direkt auf die dem Ultraschallübertragungselement (20) abgewandte Seite des zu verklebenden Verpackungsteils (11) drückendes Widerlager geschieht.

7. Einrichtung zum Verkleben von Verpackungsteilen (11) von Verpackungen (10) von Produkten der tabakverarbeitenden Industrie, insbesondere von Zigarettenverpackungen, wobei auf wenigstens einem der zu verklebenden Verpackungsteile (11) ein Klebemittel (12) aufbringbar ist und die teilweise gefaltete Verpackung (10) entlang einer Transportstrecke bewegbar und mit einem Führungselement derart in Kontakt bringbar ist, dass die zu verklebenden Verpackungsteile zur überlappenden Anlage aneinander bringbar sind und in dieser Stellung während des Transports entlang der Transportstrecke wenigstens zeitweise durch das Führungselement gehalten werden, **dadurch gekennzeichnet, dass** das erste Führungselement (20) wenigstens teilweise ein Ultraschallübertragungselement zum Übertragen von Ultraschall auf wenigstens einen zu verklebenden Verpackungsteil (11) während des Transports entlang der Transportstrecke umfasst.

8. Einrichtung nach Anspruch 7, **dadurch gekennzeichnet, dass** kein Widerlager vorgesehen ist, das direkt auf die dem Führungselement (20) abgewandte Seite des Verpackungsteils (11) drückt.

9. Einrichtung nach Anspruch 7 und/oder 8, **dadurch gekennzeichnet, dass** das Führungselement (20) ein Faltorgan ist.

10. Einrichtung nach einem oder mehreren der Ansprüche 7 bis 9, **dadurch gekennzeichnet, dass** das Führungselement (20) quer zu einer Bewegungsrichtung der Verpackungen (10) teilweise mit einem Abstand zu den zugeführten Verpackungen (10) versehen ist.

11. Einrichtung nach Anspruch 10, **dadurch gekennzeichnet, dass** sich in einem ersten Bereich (24) des Führungselementes (20) der Abstand in Förderrichtung der Verpackung (10) verringert und in einem zweiten Bereich (25) der Abstand (A1) im wesentlichen gleich bleibt.

12. Einrichtung nach einem oder mehreren der Ansprüche 7 bis 11, **dadurch gekennzeichnet, dass** ein zweites Führungselement (20) vorgesehen ist, das im wesentlichen gegenüber einer Symmetrieachse gespiegelt zu dem ersten Führungselement (20) angeordnet ist.

13. Einrichtung nach Anspruch 12, **dadurch gekennzeichnet, dass** die Verpackung (10) durch beide Führungselemente (20) durchführbar ist oder einführbar ist, wobei jeweils eine Seite der Verpackung (10) in Kontakt zu der jeweiligen Führung (20) steht.

14. Einrichtung nach Anspruch 12 und/oder 13, **dadurch gekennzeichnet, dass** der Abstand (A1) der beiden Führungen in dem zweiten Bereich (25) zueinander geringer ist als das Ausmaß (A2) der Verpackung (10).

15. Einrichtung nach einem oder mehreren der Ansprüche 12 bis 14, **dadurch gekennzeichnet, dass** das zweite Führungselement (20) wenigstens teilweise ein Ultraschallübertragungselement umfasst.

16. Faltrevolver (30) zum Falten von Packungsteilen (11) von Zigarettenverpackungen (10), umfassend eine Einrichtung nach einem oder mehreren der Ansprüche 7 bis 15.

17. Zigarettenverpackungsmaschine mit wenigstens einer Einrichtung nach einem oder mehreren der Ansprüche 7 bis 15 und/oder einem Faltrevolver (30) nach Anspruch 16.

18. Zigarettenverpackungsmaschine nach Anspruch 17, **dadurch gekennzeichnet, dass** die Einrichtung nach einem oder mehreren der Ansprüche 7 bis 15 in einer Transportstrecke und/oder Trockenstrecke angeordnet ist.

## Claims

1. A method for the adhesive bonding of pack parts (11) of packs (10) of products of the tobacco processing industry, in particular of cigarette packs, with an adhesive (12) being applied to at least one of the parts of the pack (10) to be bonded and the partially folded pack (10) being moved along a conveying section that brings it into contact with a guide element which causes the pack parts (11) to be glued to abut one another in an overlapping manner and to be held in this position during transport at least temporarily by the guide element (20), **characterized in that** at least one pack part (11) to be glued is subjected to ultrasound from the guide elements (20) as it is transported along a conveying section for the purpose of setting the adhesive means (12).

2. The method according to Claim 1, **characterized in that** the ultrasound acts on the adhesive means before the pack part (10) to be bonded is pressed against another part of the pack.

3. The method according to Claim 1 or 2, **characterized in that** the ultrasound acts on the pack parts (11) to be bonded as they are pressed or held together.

4. The method according to one or more of the Claims 1 to 3, **characterized in that** the ultrasound acts simultaneously on at least two sides of the packs (10).

5. The method according to Claim 4, **characterized in that** the pack parts (11) of the packs (10) to be glued are subjected to ultrasound on two opposite sides, in particular by two ultrasonic transmitters (20).

6. The method according to one or more the Claims 1 to 5, **characterized in that** the application of ultrasound using an ultrasonic transmitter (20) to the pack part (11) to be bonded occurs without a back support pressing directly on the side of the pack part (11) to be bonded that faces away from the ultrasonic transmitter (20).

7. An apparatus for the adhesive bonding of pack parts (11) of packs (10) of products of the tobacco processing industry, in particular cigarette packs, it being possible to apply an adhesive (12) to at least one of the pack parts (11) and to move the partially folded pack (10) along a conveying section and bring it into contact with a guide element such that the pack parts (11) to be glued can abut one another in an overlapping manner and held in this position during transport at least temporarily by the guide element, **characterized in that** the first guide element (20) incorporates at least in part an ultrasonic transmitter for transmitting ultrasound to at least one pack part (11) to be glued during its transport along the conveying section.

8. The apparatus according to Claim 7 , **characterized in that** no back support is provided which presses directly against the side of the pack part (11) facing away from the guide element (20).

9. The apparatus according to Claim 7 and/or 8, **characterized in that** the guide element (20) is a folding member.

10. The apparatus according to one or more of the Claims 7 to 9, **characterized in that** the guide element (20) is disposed transverse to a direction of movement of the packs (10) and in part spaced at a distance from the fed packs (10).

11. The apparatus according to Claim 10, **characterized in that** the spacing between the guide elements (20) decreases in a first region of same and the spacing (A1) remains essentially constant in a second region (25).

12. The apparatus according to one or more of the Claims 7 to 11, **characterized in that** a second guide element (20) is provided which is arranged essentially axis-symmetrical to the first guide element (20).

13. The apparatus according to Claim 12, **characterized in that** the pack (10) can be guided or fed through both guide elements (20), with a respective side of the pack (10) being in contact with the respective guide (20).

14. The apparatus according to Claim 12 and/or 13, **characterized in that** the spacing (A1) between the two guides is smaller in the second region (25) than the dimension (A2) of the pack (10).

15. Apparatus according to one or more of the Claims 12 to 14, **characterized in that** the second guide element (20) incorporates at least in part a ultrasonic transmitter.

16. A folding turret (30) for the purpose of folding pack parts (11) of cigarette packs (10) incorporating an apparatus according to one or more of the Claims 7 to 15.

17. A cigarette packaging machine having at least one apparatus according to one or more of the Claims 7 to 15 and/or a folding turret (30) according to Claim 16.

18. The cigarette packaging machine according to Claim 17, **characterized in that** the apparatus according to one or more of the Claims 7 to 15 is disposed in a conveying section and/or drying section.

## Revendications

1. Procédé de collage de parties (11) de paquets (10) de produits de l'industrie de transformation du tabac, en particulier de paquets de cigarettes, dans lequel un adhésif (12) est appliqué sur au moins une des parties de paquet à coller (11) et le paquet (10) partiellement plié est déplacé le long d'une voie de transport et mis en contact avec un élément de guidage (20) de façon telle que les parties de paquet à coller (11) soient mises en appui en recouvrement l'une contre l'autre et, dans cette position, soient, pendant le transport le long de la voie de transport, tenues au moins par moments par l'élément de guidage (20), **caractérisé par le fait qu'**au moins une partie de paquet à coller (11) est, pendant le transport le long de la voie de transport, soumise à l'action d'ultrasons par l'intermédiaire des éléments de guidage (20) pour la prise de l'adhésif (12).

2. Procédé selon la revendication 1, **caractérisé par le fait que** les ultrasons agissent sur l'adhésif avant une compression de la partie de paquet à coller (11) avec une autre partie de paquet.

3. Procédé selon l'une des revendications 1 et 2 ou les deux, **caractérisé par le fait que** les ultrasons agissent sur les parties de paquet à coller (11) lors de la compression ou du maintien assemblées de celles-ci.

4. Procédé selon une ou plusieurs des revendications 1 à 3, **caractérisé par le fait que** les ultrasons agissent simultanément sur au moins deux côtés des paquets (10).

5. Procédé selon la revendication 4, **caractérisé par le fait que** les parties à coller (11) des paquets (10) sont soumises à l'action des ultrasons sur deux côtés opposés, en particulier par deux éléments de transmission des ultrasons (20).

6. Procédé selon une ou plusieurs des revendications 1 à 5, **caractérisé par le fait que** l'action des ultrasons sur la partie de paquet à coller (11) produite par un élément de transmission des ultrasons (20) au lieu sans contre-appui exerçant directement une pression sur le côté de la partie de paquet à coller (11) opposé à l'élément de transmission des ultrasons (20).

7. Dispositif de collage de parties (11) de paquets (10) de produits de l'industrie de transformation du tabac, en particulier de paquets de cigarettes, dans lequel un adhésif (12) est appliqué sur au moins une des parties de paquet à coller (11) et le paquet (10) partiellement plié est déplacé le long d'une voie de transport et mis en contact avec un élément de guidage de façon telle que les parties de paquet à coller soient mises en appui en recouvrement l'une contre l'autre et, dans cette position, soient, pendant le transport le long de la voie de transport, tenues au moins par moments par l'élément de guidage, **caractérisé par le fait que** le premier élément de guidage (20) comprend au moins partiellement un élément de transmission d'ultrasons à au moins une partie de paquet à coller (11) pendant le transport le long de la voie de transport.

8. Dispositif selon la revendication 7, **caractérisé par le fait qu'**il n'est pas prévu de contre-appui qui exerce directement une pression sur le côté de la partie de paquet (11) opposé à l'élément de guidage (20).

9. Dispositif selon l'une des revendications 7 et 8 ou les deux, **caractérisé par le fait que** l'élément de guidage (20) est un organe de pliage.

10. Dispositif selon une ou plusieurs des revendications 7 à 9, **caractérisé par le fait que** l'élément de guidage (20) est, perpendiculairement à une direction de mouvement des paquets (10), en partie à une certaine distance des paquets (10) amenés.

11. Dispositif selon la revendication 10, **caractérisé par le fait que** dans une première partie (24) de l'élément de guidage (20), la distance diminue dans la direction de transport du paquet (10), et dans une deuxième partie (25), la distance (A1) reste sensiblement constante.

12. Dispositif selon une ou plusieurs des revendications 7 à 11, **caractérisé par le fait qu'**il est prévu un deuxième élément de guidage (20) qui est placé symétriquement du premier élément de guidage (20) par rapport à un axe de symétrie.

13. Dispositif selon la revendication 12, **caractérisé par le fait que** le paquet (10) peut traverser les deux éléments de guidage (20) ou y être introduit, chaque côté du paquet (10) étant en contact avec l'élément de guidage (20) associé.

14. Dispositif selon l'une des revendications 12 et 13 ou les deux, **caractérisé par le fait que** la distance (A1) des deux guidages entre eux dans la deuxième partie (25) est inférieure à la dimension (A2) du paquet (10).

15. Dispositif selon une ou plusieurs des revendications 12 à 14, **caractérisé par le fait que** le deuxième élément de guidage (20) comprend au moins partiellement un élément de transmission d'ultrasons.

16. Revolver de pliage (20) pour le pliage de parties (11) de paquets de cigarettes (10), comprenant un dispositif selon une ou plusieurs des revendications 7 à 15.

17. Empaqueteuse de cigarettes comportant au moins une dispositif selon une ou plusieurs des revendications 7 à 15 et/ou un revolver de pliage (30) selon la revendication 16.

18. Empaqueteuse de cigarettes selon la revendication 17, **caractérisée par le fait que** le dispositif selon une ou plusieurs des revendications 7 à 15 est placé dans une voie de transport et/ou une voie de séchage.
